# FASCICULE DE BREVET EUROPEEN

(11) **EP 1 366 650 B1**
(45) Date de publication et mention de la délivrance du brevet: **18.02.2009**
(21) Numéro de dépôt: 03360060.2
(22) Date de dépôt: 19.05.2003
(51) Int. Cl.: A01B 73/00

(54) **Machine agricole comportant un dispositif de mise en transport**
Landwirschaftliche Maschine mit einer Vorrichtung für die Transportstellung
Agricultural implement comprising a transporting device

(30) Priorité: 29.05.2002 FR 0206610
(43) Date de publication de la demande: 03.12.2003
(73) Titulaire: KUHN S.A., 67706 Saverne Cedex (FR)
(72) Inventeur: Ligouy, Jean-Baptiste, 18140 Lugny-Champagne (FR)

(56) Documents cités:
- FR-A- 2 712 137
- US-A- 4 738 315
- US-A- 4 800 962
- US-A- 4 934 131
- US-B1- 6 260 629

## Description

La présente invention se rapporte au domaine général du machinisme agricole. Elle concerne une machine agricole comportant un corps et un timon, lequel timon est lié audit corps au moyen d'une première articulation d'axe sensiblement vertical et permet de déplacer ladite machine agricole durant le travail et durant le transport, ledit corps s'appuyant sur le sol durant le travail au moyen de roues qui sont liées chacune audit corps via au moins un moyen de liaison, ledit corps comportant une unité centrale et une unité de travail, laquelle unité de travail est disposée transversalement à la direction d'avance pour le travail et est disposée sensiblement parallèlement à la direction d'avance pour le transport (voir par exemple FR-A-2712137).

Une telle machine agricole est connue de l'art antérieur par l'intermédiaire du prospectus **Faucheuse-Conditionneuse ALTERNA 500**. La déposante KUHN S.A. fabrique et commercialise une telle machine agricole. Cette machine connue est destinée à être attelé à un tracteur pour le travail et pour le transport, elle comporte un corps muni d'un timon d'attelage. Le corps de la machine comporte une unité centrale et une unité de travail composée de deux groupes d'outils de travail disposés respectivement de part et d'autre de l'unité centrale. Au travail, le corps s'appuie sur le sol au moyen de roues de travail qui sont liées audit corps au moyen de bielles. Les deux groupes d'outils de travail sont disposés transversalement à la direction d'avance. Pour le transport, ledit corps s'appuie sur le sol au moyen de roues de transport, celles-ci étant différentes des roues de travail. Les roues de transport pivotent autour d'une articulation horizontale respective lors du passage de la position de travail à la position de transport. Les groupes d'outils de travail sont alors disposés parallèlement à la direction d'avance de transport.

Comme cette faucheuse-conditionneuse utilise des roues spécifiques pour le travail et des roues destinées uniquement au transport, il est donc nécessaire d'équiper la machine d'un jeu de roues supplémentaire pour le transport et d'un équipement réalisant le pivotement desdites roues de transport autour de l'articulation horizontale respective pour les rendre opérationnelles au transport. Lesdites roues spécifiques de transport et l'équipement réalisant le pivotement desdites roues de transport augmentent d'une part le poids et d'autre part le prix d'une telle machine agricole.

La présente invention a pour but de remédier aux inconvénients précités. Elle doit notamment permettre de transposer aisément une machine agricole comportant une largeur de travail supérieure à la largeur maximale autorisée pour la circulation sur la route d'une position de travail à une position de transport.

A cet effet, une importante caractéristique de l'invention telle que revendiquée consiste en ce que l'unité de travail est liée à l'unité centrale au moyen d'une deuxième articulation d'axe sensiblement vertical de sorte que l'unité de travail puisse être amenée dans une position de travail ou dans une position de transport par rapport à ladite unité centrale, et par le fait que ledit(lesdits) moyen(s) de liaison permet(tent) d'éloigner ou de rapprocher la(les) roue(s) correspondante(s) d'un plan vertical médian dudit corps, lesdites roues étant utilisées lors du travail et lors du transport.

D'autres caractéristiques et avantages de l'invention ressortiront de la description ci-après des exemples de réalisation non limitatifs de l'invention, avec référence aux dessins annexés dans lesquels :
- la **figure 1** représente une vue de côté d'une machine selon l'invention en position de transport;
- la **figure 2** représente une vue de coté de la machine de la figure 1 en position de travail;
- la **figure 3** représente une vue de dessus de la machine de la figure 1 en position de transport ;
- la **figure 4** représente une vue de dessus de la machine de la figure 2 dans une première position de travail ;
- la **figure 5** représente un autre exemple de réalisation d'une machine selon l'invention en vue de dessus et dans une autre position de travail.

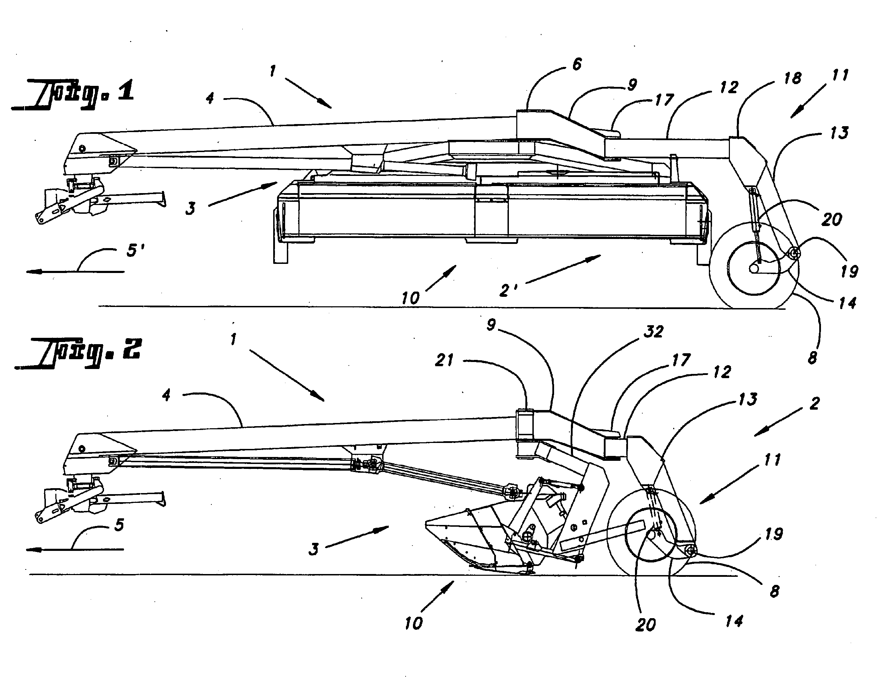

La machine agricole (1), conforme à la présente invention, représentée sur les figures, est destinée à être attelée à un tracteur (non représenté) lors du transport et lors du travail. La figure 1 représente la machine agricole (1) dans une position de transport (2'), elle comporte notamment un corps (3) et un timon (4). Ledit timon (4) est pourvu à sa partie frontale d'un dispositif d'attelage connu de l'homme de l'art. Ledit timon (4) sert à déplacer la machine agricole (1) dans la direction d'avancement pour le transport indiquée par la flèche (5'). La figure 2 représente la machine agricole (1) dans une position de travail (2). Dans cette position de travail (2), le tracteur anime la machine agricole (1) selon la direction d'avance de travail indiquée par la flèche (5). Le timon (4) comporte une extrémité arrière qui est monté de manière pivotante sur ledit corps (3) au moyen d'une première articulation (6) d'axe sensiblement vertical.

Dans la suite de la description, les notions suivantes "avant" et "arrière", "devant" et "derrière" sont définies par rapport au sens d'avance au travail (5) et les notions "droite" et "gauche" sont définies en regardant ladite machine agricole (1) de l'arrière dans le sens d'avance au travail (5).

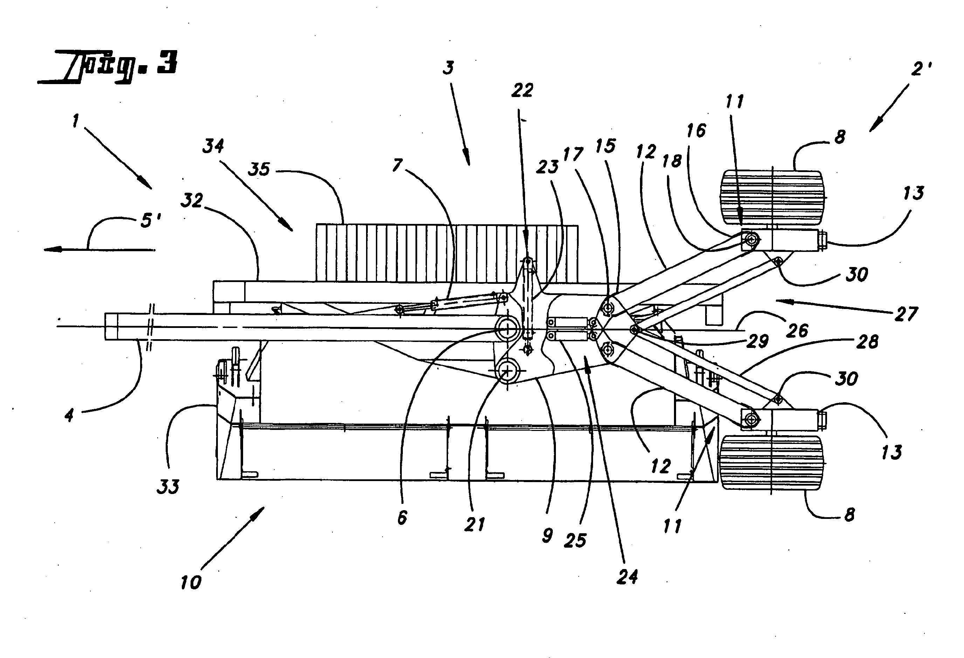

Dans l'exemple de réalisation représenté sur la figure 3, ledit timon (4) est disposé sensiblement parallèlement à la direction d'avance au transport (5'), ainsi ladite machine agricole (1) est placée dans le prolongement dudit tracteur. Ledit corps (3) est disposé, de préférence, sensiblement dans le prolongement du timon (4). Cette configuration correspond à la position de transport (2') de ladite machine agricole (1). L'orientation dudit timon (4) par rapport audit corps (3) est avantageusement réglable au moyen d'un vérin de position (7). Ledit vérin de position (7) est implanté entre ledit corps (3) et ledit timon (4). Dans la position de transport (2'), le vérin de position (7) se trouve dans une course intermédiaire.

Le corps (3) de la machine agricole (1) s'appuie sur le sol au moyen de roues (8) et comporte une unité centrale (9) et une unité de travail (10). Au transport, l'unité de travail (10) est disposée parallèlement à la direction d'avance au transport (5'). D'une manière préférentielle, dans la position de transport (2'), lesdites roues (8) sont disposées à l'arrière de l'unité de travail (10). Chaque roue (8) est liée à l'unité centrale (9) par un moyen de liaison (11) correspondant. Les moyens de liaison (11) sont avantageusement liés à la partie arrière de l'unité centrale (9). Chaque moyen de liaison (11) est constitué d'une bielle (12) articulée et d'une structure porteuse de roue (13). Ladite structure porteuse de roue (13) est munie d'un bras de roue (14) qui permet de déplacer la roue (8) correspondante dans un plan sensiblement horizontale. Ladite bielle (12) articulée comporte une première extrémité (15) et une deuxième extrémité (16). La première extrémité (15) est liée à l'unité centrale (9) au moyen d'une troisième articulation (17) d'axe sensiblement vertical. Ladite deuxième extrémité (16) est liée à ladite structure porteuse de roue (13) au moyen d'une quatrième articulation (18) d'axe sensiblement vertical. Les axes de ladite troisième articulation (17) et de ladite quatrième articulation (18) sont sensiblement parallèles et se situent sur la partie arrière de l'unité centrale (9). A la lumière des figures 1 et 2, ledit bras de roue (14) est lié à ladite structure porteuse de roue (13) au moyen d'une cinquième articulation (19) d'axe sensiblement horizontal. Entre ladite structure porteuse de roue (13) et ledit bras de roue (14) est implanté un vérin de manoeuvre (20) permettant un réglage en hauteur par rapport au sol de ladite machine agricole (1). La machine agricole (1) peut, en combinaison avec le dispositif d'attelage connu, ainsi effectuer un déplacement en hauteur dans un plan sensiblement parallèle au sol et sensiblement horizontal. Pour le transport et pour le travail, il est particulièrement appréciable de pouvoir adapter la hauteur de l'unité de travail (10) par rapport à la surface du sol. Lors du transport, il est aussi particulièrement avantageux que ladite machine agricole (1) dispose d'une garde au sol importante pour franchir des obstacles.

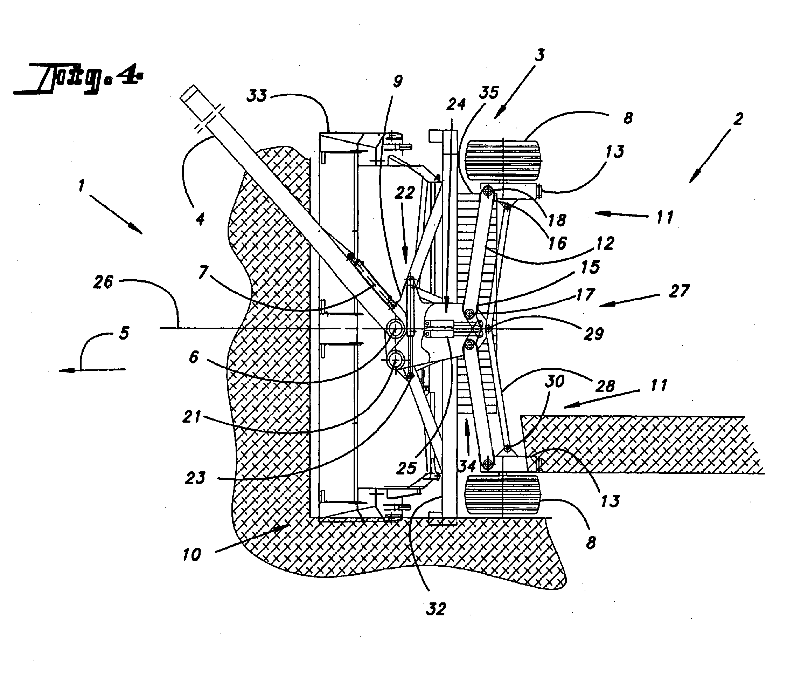

Lors du travail selon l'exemple de réalisation représenté sur la figure 4, l'unité de travail (10) est disposée d'une part transversalement à la direction d'avance (5) et d'autre part décalée latéralement par rapport au tracteur. Ladite première articulation (6) permet, au moyen dudit vérin de position (7), de décaler ladite machine agricole (1) vers la droite ou vers la gauche par rapport au tracteur. Le vérin de position (7) permet également de transposer la machine agricole (1) d'une position de travail (2) dans laquelle l'unité de travail (10) est décalée latéralement par rapport audit tracteur dans une position de transport (2') dans laquelle l'unité de travail (10) se situe sensiblement dans le prolongement du tracteur.

Dans la position de travail (2), lesdites roues (8) s'étendent avantageusement derrière l'unité de travail (10) compte tenu de la direction d'avance (5). La machine agricole (1), selon l'invention, comporte de préférence deux roues (8). Selon la figure 4, lesdites roues (8) sont éloignées l'une de l'autre de sorte que le centre de gravité de la machine agricole (1) se situe correctement à l'intérieur du triangle de sustentation formé par lesdites roues (8) et le point d'appui du timon (4) sur le tracteur. Cette position écartée desdites roues (8) assure une bonne stabilité au travail de ladite machine agricole (1). La largeur de travail de cette machine agricole (1) étant importante et même plus grande que la largeur de transport autorisée sur les routes, il n'est pas concevable de transporter cette machine agricole (1) dans la position de travail (2).

Suivant une caractéristique importante de la présente invention, l'unité de travail (10) est liée à l'unité centrale (9) au moyen d'une deuxième articulation (21) d'axe sensiblement vertical. Ladite première articulation (6) et ladite deuxième articulation (21) sont avantageusement liées sur la partie avant de l'unité centrale (9). L'axe de ladite deuxième articulation (21) est, de préférence, parallèle à l'axe de ladite première articulation (6). Pour le transport, il est particulièrement avantageux de pouvoir pivoter l'unité de travail (10) par rapport à l'unité centrale (9) autour de ladite deuxième articulation (21), au moyen d'un mécanisme d'orientation de l'unité de travail (22). Ainsi, l'encombrement de ladite machine agricole (1) au transport respecte le gabarit réglementaire pour la circulation sur la voie publique. Comme visible sur la figure 3, l'unité de travail (10) se situe ainsi sensiblement sous le timon (4). Ledit mécanisme d'orientation de l'unité de travail (22) comporte notamment un vérin d'orientation de l'unité de travail (23) qui est lié d'une part à l'unité de travail (10) et d'autre part à l'unité centrale (9). Ledit vérin d'orientation de l'unité de travail (23) est rétracté lors du transport alors que lors du travail, ledit vérin d'orientation de l'unité de travail (23) est étendu.

D'une manière préférentielle, chaque bielle (12) est orientée par rapport à l'unité centrale (9) au moyen d'un mécanisme d'orientation de bielle (24). Le mécanisme d'orientation de bielle (24) comporte avantageusement un vérin d'orientation de bielle (25). Ledit vérin d'orientation de bielle (25) est lié d'une part à l'unité centrale (9) et d'autre part à ladite bielle (12) correspondante. Ledit vérin d'orientation de bielle (25) permet de contrôler le débattement angulaire de ladite bielle (12) correspondante autour de ladite troisième articulation (17). Sur les figures, lesdites roues (8) sont placées de part et d'autre d'un plan vertical médian (26) du corps (3) de ladite machine agricole (1). Ledit plan vertical médian (26) passe, de préférence, par l'axe de ladite première articulation (6). A la lumière de la figure 4, lors du travail, lesdites roues (8) sont éloignées l'une de l'autre par l'action desdits vérins d'orientation de bielle (25) qui sont complètement étendus. Par contre, pour le transport, conformément à la figure 3, lesdites roues (8) se situent sensiblement dans le prolongement de l'unité de travail (10) afin de ne pas dépasser le gabarit routier de 3 mètres et sont donc rapprochées l'une de l'autre. Dans la position de transport (2'), lesdits vérins d'orientation de bielle (25) sont rétractés. Lesdites roues (8) sont relativement plus proche dudit plan vertical médian (26). D'une manière avantageuse, lesdits vérins d'orientation de bielle (25) sont avantageusement couplés entre eux ce qui permet aux bielles (12) d'effectuer le même mouvement et ainsi d'être symétrique par rapport audit plan vertical médian (26).

Afin d'effectuer le passage de ladite machine agricole (1) d'une position de travail (2) à une position de transport (2') et vice-versa, il est indispensable que les longueurs de certaines parties élémentaires de la machine agricole (1) soient adaptées. Ainsi, la longueur desdites bielles (12) doit être au moins sensiblement égale à la moitié de la largeur de l'unité de travail (10). La longueur du timon (4) est telle que l'unité de travail (10) puisse pivoter autour de ladite deuxième articulation (21) et que l'unité de travail (10) puisse être disposée latéralement au tracteur. Pour des raisons de clarté, le timon (4) n'est représenté que partiellement sur les figures 3, 4 et 5. Pour des raisons de stabilité notamment lors du transport, il est parfaitement possible d'envisager l'utilisation d'un timon télescopique.

Suivant une autre caractéristique importante de la présente invention, lesdites roues (8) sont utilisées lors du travail et lors du transport. Par conséquent, il est nécessaire que les roues soient directionnelles afin de favoriser la manoeuvrabilité lors du passage d'une position de travail (2) à la position de transport (2') et inversement. A cet effet, la structure porteuse de roue (13) de chaque roue (8) comporte un mécanisme d'orientation de la structure porteuse de roue (27).

A la lumière des figures 3 et 4, le mécanisme d'orientation de la structure porteuse de roue (27) comporte, en sus de la bielle (12) articulée, une bielle d'orientation de la structure porteuse de roue (28). Ladite bielle d'orientation de la structure porteuse de roue (28) est liée, d'une part, à l'unité centrale (9) au moyen d'une sixième articulation (29) d'axe sensiblement vertical et d'autre part à la structure porteuse de roue (13) au moyen d'une septième articulation (30) d'axe sensiblement vertical. L'axe de la sixième articulation (29) est sensiblement parallèle à l'axe de la septième articulation (30). D'une manière préférentielle, l'axe de la troisième articulation (17), l'axe de la quatrième articulation (18), l'axe de la sixième articulation (29) et l'axe de la septième articulation (30) de chaque roue (8) sont sensiblement parallèles. Ladite troisième articulation (17), ladite quatrième articulation (18), ladite sixième articulation (29) et ladite septième articulation (30) de chaque roue (8) forment avantageusement un parallélogramme. L'orientation de chaque roue (8) se fait simultanément avec l'orientation de ladite bielle (12) respective commandée par ledit vérin d'orientation de la bielle (25) respectif. Chaque roue (8) peut ainsi être déplacée dans un plan sensiblement vertical passant par ladite quatrième articulation (18). D'une manière avantageuse, les deux bielles d'orientation de la structure porteuse de roue (28) peuvent avoir une sixième articulation (29) commune dont l'axe serait sensiblement confondu avec ledit plan vertical médian (26).

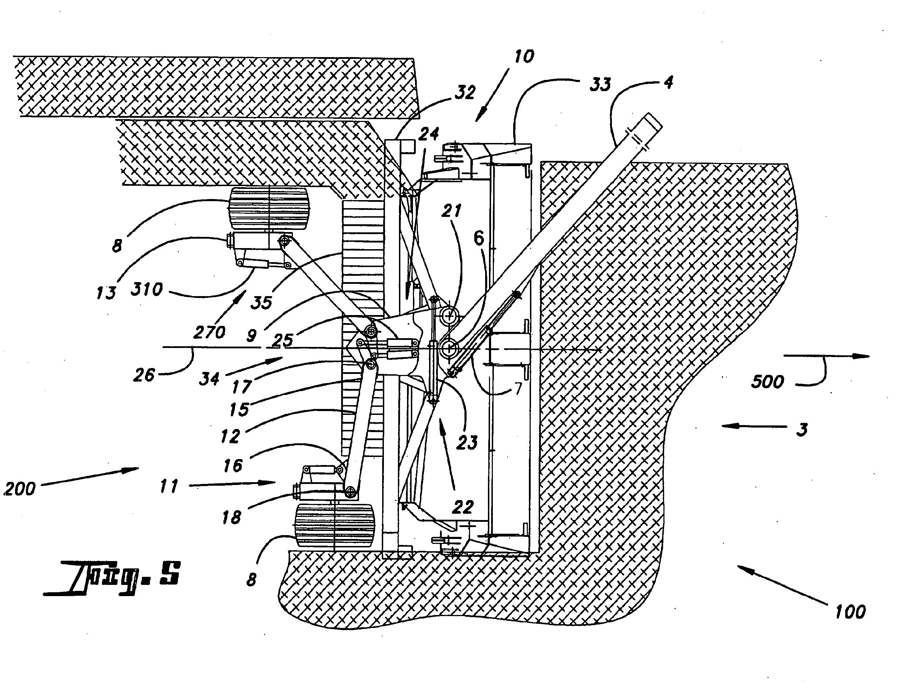

Sur la figure 5 apparaît un autre exemple de réalisation d'une machine agricole (100) selon l'invention. Cette machine agricole (100) comporte les mêmes éléments constitutifs que la machine agricole (1) du précédent exemple de réalisation. De ce fait ces éléments ne seront pas redécrits. La différence entre ces deux exemples de réalisation, se situe au niveau du mécanisme d'orientation de la structure porteuse (270). Afin de réaliser l'orientation des roues (8) de cet autre exemple de réalisation, ledit mécanisme d'orientation de la structure porteuse de roue (270) comporte un vérin d'orientation de la structure porteuse de roue (310). Ce vérin d'orientation de la structure porteuse de roue (310) est implanté entre ladite structure porteuse de roue (13) et ladite bielle (12). Ledit vérin d'orientation de la structure porteuse de roue (310) permet ainsi de déplacer la roue (8) correspondante dans un plan sensiblement vertical passant par ladite quatrième articulation (18). D'une manière préférentielle, ledit vérin d'orientation de bielle (25) et ledit vérin d'orientation de la structure porteuse de roue (310) sont couplés et suivent ainsi un mouvement identique. Selon une autre manière, il est tout à fait possible de commander chaque vérin d'orientation de bielle (25) et chaque vérin d'orientation de la structure porteuse de roue (310) séparément.

Comme représenté sur les figures, l'unité de travail (10) comporte un châssis (32) qui est lié à l'unité centrale (9) au moyen de ladite deuxième articulation (21). Ledit châssis (32) pivote par rapport à l'unité centrale (9) autour de ladite deuxième articulation (21) pour le passage d'une position de travail (2) à une position de transport (2') et inversement. Ladite machine agricole (1 ; 100) représentée dans les exemples de réalisation sur les figures correspond à une machine de récolte.

Cette machine de récolte comporte, d'une manière préférentielle, un mécanisme de coupe (33) lié audit châssis (32) au moyen d'un dispositif de suspension connu de l'homme de l'art. Le dispositif de suspension permet audit mécanisme de coupe (33) de suivre les dénivellations du sol indépendamment dudit châssis (32). Ledit mécanisme de coupe (33) est représenté de manière simplifiée sur les figures, il est entraîné par des éléments de transmission connus de l'homme de l'art. Un tel mécanisme de coupe (33) est connu de l'homme de l'art, il ne sera donc pas décrit davantage.

Sur la figure 4, le vérin de position (7) est rétracté, ainsi la machine de récolte est décalée sur le côté gauche du tracteur pour qu'il ne roule pas sur le fourrage devant être coupé. Lors du travail de ladite machine de récolte, le mécanisme de coupe (33) glisse sur le sol et coupe le fourrage. Celui-ci est transmis à un dispositif de traitement du fourrage (non représenté) réalisé sous la forme d'un rotor qui fragmente la pellicule extérieure du fourrage pour accélérer son séchage. Un tel dispositif de traitement du fourrage étant à la portée de l'homme de l'art de l'homme, il n'a donc pas été représenté sur les figures et ne sera pas décrit davantage.

D'une manière également connue de l'homme de l'art, ladite machine de récolte comporte, en sus, un dispositif permettant de déplacer le fourrage transversalement à la direction d'avance pour le travail (5). Ce dispositif est, de préférence, constitué d'un dispositif groupeur (34) afin de regrouper le fourrage sur un andain à l'aide d'une bande transporteuse (35). Ladite bande transporteuse (35) est disposée, de préférence, directement derrière le mécanisme de conditionnement pour éviter toute perte de fourrage. Selon la figure 4, le fourrage est transporté par ladite bande transporteuse (35) et est déposé du côté gauche du mécanisme de coupe (33). Les roues (8) étant écartées au maximum l'une de l'autre dans la position de travail (2), l'espace ainsi créé favorise l'utilisation dudit dispositif groupeur (34).

Lors de l'emploi d'une telle machine de récolte, il est commun de travailler en va-et-vient dans une parcelle. La figure 5 représente une autre position de travail (200) dans laquelle ledit vérin de position (7) est étendu pour que le mécanisme de coupe (33) passe à droite dudit tracteur. Dans la figure 5, la machine agricole (100) se déplace dans l'autre direction de travail (500). La commande du vérin de position (7) entraîne simultanément le déplacement de ladite bande transporteuse (35). D'une manière particulièrement avantageuse, dans cette deuxième position de travail (200), une desdites roues (8) se rapproche quelque peu dudit plan vertical médian (26) et se rapproche donc de l'autre roue (8). Ladite roue (8) est positionnée de sorte à ne pas gêner ledit déplacement de fourrage sur le côté droit afin de rapprocher au mieux deux andains successifs. Le regroupement de ces deux andains successifs est idéalement adapté aux pick-up connus. De plus, ces andains ne sont pas entassés l'un sur l'autre pour permettre un séchage plus rapide. Dans cet autre exemple de réalisation, chaque vérin d'orientation de bielle (25) est piloté de manière individuelle afin d'obtenir, par rapport au plan vertical médian (26), une orientation asymétrique desdites bielles (12).

D'une manière préférentielle, la commande des différents vérins (7, 20, 23, 25, 310) de ladite machine agricole (1 ; 100) est combinée afin de pouvoir réaliser un passage automatique de la position de travail (2 ; 200) à la position de transport (2') et inversement ou encore d'une position de travail (2 ; 200) à une autre position de travail (200 ; 2). Les différents vérins (7, 20, 23, 25, 310) sont avantageusement du type double effet.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans pour autant sortir du domaine de protection tel qu'il est défini dans les revendications.

C'est ainsi qu'il est tout à fait possible que l'unité de travail (10) comporte un autre type de machine de fenaison ou encore une machine de travail du sol.

Il est encore imaginable que le mécanisme d'orientation des bielles (24) soit réalisé de manière mécanique. A cet effet, les premières extrémités (15) de chaque bielle (12) sont destinées à entrer en contact l'une avec l'autre et à former un engrenage permettant d'effectuer l'orientation desdites bielles (12) autour de la troisième articulation (17). L'orientation desdites bielles (12) se fait de façon synchrone. Il est aussi imaginable que les deuxièmes extrémités (16) forment avec ladite structure porteuse de roue (13) correspondante un engrenage permettant de réaliser l'orientation desdites roues (8) autour de la quatrième articulation (18).

Il est également concevable que l'axe de ladite première articulation (6) et l'axe de ladite deuxième articulation (21) soient sensiblement confondu. Ladite première articulation (6) et ladite deuxième articulation (21) sont avantageusement superposées pour permettre à l'unité de travail (10) d'être amenée dans une position de travail (2 ; 200) ou dans une position de transport (2') par rapport à l'unité centrale (9).

Il est aussi envisageable que la machine de récolte ne soit pas équipée d'un dispositif groupeur (34) mais d'un dispositif constitué de déflecteurs connus de l'homme de l'art. Les déflecteurs permettant avantageusement la formation d'un andain central. Selon une autre variante, ladite machine de récolte peut aussi épandre le fourrage sur toute la largeur de travail. L'épandage large est réalisé, de préférence, en omettant ou en relevant le dispositif groupeur (34) d'andains ou les déflecteurs.

Le corps (3) de la machine agricole (1 ; 100) s'appuie sur le sol au moyen de roues (8) uniques ou alors de roues multiples.

## Revendications

1. Machine agricole (1 ; 100) comportant un corps (3) et un timon (4), lequel timon (4) est lié audit corps (3) au moyen d'une première articulation (6) d'axe sensiblement vertical et permet de déplacer ladite machine agricole (1 ; 100) durant le travail et durant le transport, ledit corps (3) s'appuyant sur le sol durant le travail au moyen de roues (8) qui sont liées chacune audit corps (3) via au moins un moyen de liaison (11), ledit corps (3) comportant une unité centrale (9) et une unité de travail (10), laquelle unité de travail (10) est disposée transversalement à la direction d'avance pour le travail (5) et est disposée sensiblement parallèlement à la direction d'avance pour le transport (5'), ***caractérisée par le fait* que** l'unité de travail (10) est liée à l'unité centrale (9) au moyen d'une deuxième articulation (21) d'axe sensiblement vertical de sorte que l'unité de travail (10) puisse être amenée dans une position de travail (2 ; 200) ou dans une position de transport (2') par rapport à ladite unité centrale (9), et ***par le fait* que** ledit ou lesdits moyen(s) de liaison (11) est ou sont lié(s) à la partie arrière de l'unité centrale (9) et permet(tent) d'éloigner ou de rapprocher la ou les roue(s) (8) correspondante(s) d'un plan vertical médian (26) dudit corps (3), lesdites roues (8) étant utilisées lors du travail et lors du transport.

2. Machine selon la revendication 1, ***caractérisée par le fait* que** chaque moyen de liaison (11) est constitué d'une bielle (12) articulée.

3. Machine selon la revendication 2, ***caractérisée par le fait* qu'**une première extrémité (15) de chaque bielle (12) est liée à l'unité centrale (9) au moyen d'une troisième articulation (17) d'axe sensiblement vertical.

4. Machine selon la revendication 2 ou 3, ***caractérisée par le fait* que** l'orientation angulaire de chaque bielle (12) par rapport à l'unité centrale (9) est réalisée par un mécanisme d'orientation de bielle (24).

5. Machine selon la revendication 4, ***caractérisée par le fait* que** ledit mécanisme d'orientation de bielle (24) comporte au moins un vérin d'orientation de bielle (25).

6. Machine selon l'une quelconque des revendications 2 à 5, ***caractérisée par le fait* que** la(les) roue(s) (8) est(sont) liée(s) à une deuxième extrémité (16) de sa(leur) bielle (12) respective via une structure porteuse de roue (13) qui est liée à ladite deuxième extrémité (16) au moyen d'une quatrième articulation (18) d'axe sensiblement vertical.

7. Machine selon la revendication 6, ***caractérisée par le fait* que** l'orientation angulaire de chaque structure porteuse de roue (13) par rapport à la bielle (12) correspondante est réalisée par un mécanisme d'orientation de la structure porteuse de roue (27 ; 270).

8. Machine selon la revendication 7, ***caractérisée par le fait* que** ledit mécanisme d'orientation de la structure porteuse de roue (270) comporte un vérin d'orientation de la structure porteuse de roue (310).

9. Machine selon les revendications 5 et 8, ***caractérisée par le fait* que** ledit vérin d'orientation de bielle (25) et ledit vérin d'orientation de la structure porteuse de roue (310) correspondant sont couplés.

10. Machine selon la revendication 9, ***caractérisée par le fait* que** ledit vérin d'orientation de bielle (25) et ledit vérin d'orientation de la structure porteuse de roue (310) correspondant sont couplés en série.

11. Machine selon la revendication 7, ***caractérisée par le fait* que** ledit mécanisme d'orientation de la structure porteuse de roue (27) comporte une bielle d'orientation de la structure porteuse de roue (28) qui forme avec la bielle (12) correspondante sensiblement un parallélogramme.

12. Machine selon l'une quelconque des revendications 2 à 11, ***caractérisée par le fait* que** chaque bielle (12) peut être orientée séparément.

13. Machine selon l'une quelconque des revendications 1 à 12, ***caractérisée par le fait* que** la longueur desdites bielles (12) est sensiblement inférieure à la moitié de la largeur de l'unité de travail (10).

14. Machine selon l'une quelconque des revendications 1 à 13, ***caractérisée par le fait* que** l'axe de la première articulation (6) et l'axe de la deuxième articulation (21) sont sensiblement confondus.

15. Machine selon l'une quelconque des revendications 1 à 14, ***caractérisée par le fait* que** ledit plan vertical médian (26) passe sensiblement par l'axe de ladite première articulation (6).

16. Machine selon l'une quelconque des revendications 1 à 15, ***caractérisée par le fait* que** l'unité de travail (10) comporte un châssis (32) lié à l'unité centrale (9) au moyen de la deuxième articulation (21), de , sorte pour le passage d'une position de travail (2 ; 200) à une position de transport (2') et vice versa, ledit châssis (32) pivote par rapport à l'unité centrale (9) autour de l'axe de ladite deuxième articulation (21).

17. Machine selon l'une quelconque des revendications 1 à 16, ***caractérisée par le fait* que** ladite unité de travail (10) est amenée dans sa position de travail (2 ; 200) et/ou dans sa position de transport (2') au moyen d'un mécanisme d'orientation de l'unité de travail (22).

18. Machine selon la revendication 17, ***caractérisée par le fait* que** ledit mécanisme d'orientation de l'unité de travail (22) comporte un vérin d'orientation de l'unité de travail (23).

19. Machine selon les revendications 5 et 18, ***caractérisée par le fait* que** lesdits vérins d'orientation de bielle (25) et ledit vérin d'orientation de l'unité de travail (23) sont couplés.

20. Machine selon la revendication 19, ***caractérisée par le fait* que** lesdits vérins d'orientation de bielle (25) et ledit vérin d'orientation de l'unité de travail (13) sont couplés en série.

21. Machine selon l'une quelconque des revendications 1 à 20, ***caractérisée par le fait* que** ladite première articulation (6) et ladite deuxième articulation (21) sont liées à la partie avant de l'unité centrale (9).

22. Machine selon l'une quelconque des revendications 1 à 21, ***caractérisée par le fait* qu'**il s'agit d'une machine de récolte.

23. Machine selon la revendication 22, ***caractérisée par le fait* que** ladite machine de récolte comporte un dispositif permettant de déplacer le fourrage transversalement à la direction d'avance pour le travail (2).

24. Machine selon la revendication 23, ***caractérisée par le fait* que** ledit dispositif est constitué d'un dispositif groupeur (34).

25. Machine selon la revendication 24, ***caractérisée par le fait* que** ledit dispositif groupeur (34) comporte au moins une bande transporteuse (35).

26. Machine selon l'une quelconque des revendications 23 à 25, ***caractérisée par le fait* que** la(les) roue(s) (8) située(s) du côté vers lequel est déplacé le fourrage, est(sont) positionnée(s) de sorte à ne pas gêner ledit déplacement.

27. Machine selon l'une quelconque des revendications 1 à 26, ***caractérisée par le fait* que** les roues (8) se situent à l'arrière de l'unité de travail (10).

## Claims

1. Agricultural machine (1 ; 100) including a body (3) and a drawbar (4), which drawbar (4) is connected to the said body (3) by means of a first articulation (6) with a substantially vertical axis and allows the said agricultural machine (1 ; 100) to be moved along during work and during transport, the said body (3) resting on the ground during work by means of wheels (8) which are each connected to the said body (3) via at least one connecting means (11), the said body (3) comprising a central unit (9) and a work unit (10), which work unit (10) is arranged transversely to the direction of forward travel for work (5) and is arranged substantially parallel to the direction of forward travel for transport (5'), ***characterized in* that** the work unit (10) is connected to the central unit (9) using a second articulation (21) with a substantially vertical axis so that the work unit (10) can be brought into a work position (2 ; 200) or into a transport position (2') with respect to the said central unit (9), and ***in* that** the said connecting means (11) is or are connected to the rear part of the central unit (9) and allows (allow) the corresponding wheel or wheels (8) to be moved away from or closer to a vertical mid-plane (26) of the said body (3), the said wheels (8) being used during work and during transport.

2. Machine according to claim 1, ***characterized in* that** each connecting means (11) includes an articulated connecting rod (12).

3. Machine according to claim 2, ***characterized in* that** a first end (15) of each connecting rod (12) is connected to the central unit (9) using a third articulation (17) with a substantially vertical axis.

4. Machine according to claim 2 or 3, ***characterized in* that** the angular orientation of each connecting rod (12) with respect to the central unit (9) is achieved by a connecting-rod-orientation mechanism (24).

5. Machine according to claim 4, ***characterized in* that** the said connecting-rod-orientation mechanism (24) includes at least one connecting-rod-orientation ram (25).

6. Machine according to any one of claims 2 to 5, ***characterized in* that** the wheel(s) (8) is (are) connected to a second end (16) of its (their) respective connecting rod (12) via a wheel bearing structure (13) which is connected to the said second end (16) using a fourth articulation (18) with a substantially vertical axis.

7. Machine according to claim 6, ***characterized in* that** the angular orientation of each wheel bearing structure (13) with respect to the corresponding connecting (12) rod is achieved by a wheel-bearing-structure-orientation mechanism (27 ; 270).

8. Machine according to claim 7, ***characterized in* that** the said wheel-bearing-structure-orientation mechanism (270) includes a wheel-bearing-structure-orientation ram (310).

9. Machine according to claims 5 and 8, ***characterized in* that** the said connecting-rod-orientation ram (25) and the said corresponding wheel-bearing-structure-orientation ram (310) are coupled.

10. Machine according to claim 9, ***characterized in* that** the said connecting-rod-orientation ram (25) and the said corresponding wheel-bearing-structure-orientation ram (310) are coupled in series.

11. Machine according to claim 7, ***characterized in* that** the said wheel-bearing-structure-orientation mechanism (27) includes a wheel-bearing-structure-orientation connecting rod (28) which forms substantially a parallelogram with the corresponding connecting rod (12).

12. Machine according to any one of claims 2 to 11, ***characterized in* that** each connecting rod (12) can be orientated separately.

13. Machine according to any one of claims 1 to 12, ***characterized in* that** the length of the said connecting rods (12) is substantially shorter than half the width of the working unit (10).

14. Machine according to any one of claims 1 to 13, ***characterized in* that** the axis of the first articulation (6) and the axis of the second articulation (21) are substantially coincident.

15. Machine according to any one of claims 1 to 14, ***characterized in* that** the said vertical mid-plane (26) passes substantially through the axis of the said first articulation (6).

16. Machine according to any one of claims 1 to 15, ***characterized in* that** the working unit (10) comprises a chassis (32) connected to the central unit (9) by means of the second articulation (21) so that, in order to move from a work position (2 ; 200) to a transport position (2') and vice versa, the said chassis (32) pivots with respect to the central unit (9) about the axis of the said second articulation (21).

17. Machine according to any one of claims 1 to 16, ***characterized in* that** the said working unit (10) is brought into its work position (2 ; 200) and/or into its transport position (2') by means of a working-unit-orientation mechanism (22).

18. Machine according to claim 17, ***characterized in* that** the said working-unit-orientation mechanism (22) includes a working-unit-orientation ram (23).

19. Machine according to claims 5 and 18, ***characterized in* that** the said connecting-rod-orientation rams (25) and the said working-unit-orientation ram (23) are coupled.

20. Machine according to claim 19, ***characterized in* that** the said connecting-rod-orientation rams (25) and the said working-unit-orientation ram (23) are coupled in series.

21. Machine according to any one of claims 1 to 20, ***characterized in* that** the said first articulation (6) and the said second articulation (21) are connected to the front part of the central unit (9).

22. Machine according to any one of claims 1 to 21, ***characterized in* that** the said machine is a harvesting machine.

23. Machine according to claim 22, ***characterized in* that** the said harvesting machine includes a device allowing the forage to be moved transversely to the direction of forward travel during work (2).

24. Machine according to claim 23, ***characterized in* that** the said device includes a grouping device (34).

25. Machine according to claim 24, ***characterized in* that** the said grouping device (34) includes at least one conveyor belt (35).

26. Machine according to any one of claims 23 to 25, ***characterized in* that** the wheel(s) (8) situated on the side toward which the forage is moved is (are) positioned in such a way as not to impede the said movement.

27. Machine according to any one of claims 1 to 26, ***characterized in* that** the wheels (8) are located at the rear of the working unit (10).

## Patentansprüche

1. Landwirtschaftliche Maschine (1; 100) mit einem Körper (3) und einer Deichsel (4), wobei die Deichsel (4) mit dem Körper (3) mittels eines ersten Gelenks (6) mit einer im Wesentlichen vertikalen Achse verbunden ist und es ermöglicht, die landwirtschaftliche Maschine (1; 100) während der Arbeit und während des Transports zu verschieben, wobei der Körper (3) sich während der Arbeit mittels Rädern (8) auf dem Boden abstützt, die jeweils mit dem Körper (3) über mindestens ein Verbindungsmittel (11) verbunden sind, wobei der Körper (3) eine zentrale Einheit (9) und eine Arbeitseinheit (10) umfasst, wobei die Arbeitseinheit (10) quer zur Vorschubrichtung für die Arbeit (5) angeordnet ist und im Wesentlichen parallel zur Vorschubrichtung für den Transport (5') angeordnet ist, ***dadurch gekennzeichnet,* dass** die Arbeitseinheit (10) mit der zentralen Einheit (9) mittels eines zweiten Gelenks (21) mit einer im Wesentlichen vertikalen Achse verbunden ist, so dass die Arbeitseinheit (10) in eine Arbeitsposition (2; 200) oder in eine Transportposition (2') in Bezug zur zentralen Einheit (9) gebracht werden kann, und ***dadurch**,* dass das oder die Verbindungsmittel (11) mit dem hinteren Teil der zentralen Einheit (9) verbunden ist oder sind und es ermöglicht(en), das oder die entsprechende Rad(Räder) (8) einer vertikalen Mittelebene (26) des Körpers (3) anzunähern oder von dieser zu entfernen, wobei die Räder (8) bei der Arbeit und beim Transport verwendet werden.

2. Maschine nach Anspruch 1, ***dadurch gekennzeichnet,* dass** jedes Verbindungsmittel (11) von einer Gelenkstange (12) gebildet ist.

3. Maschine nach Anspruch 2, ***dadurch gekennzeichnet,* dass** ein erstes Ende (15) jeder Stange (12) mit der zentralen Einheit (9) mittels eines dritten Gelenks (17) mit einer im Wesentlichen vertikalen Achse verbunden ist.

4. Maschine nach Anspruch 2 oder 3, ***dadurch gekennzeichnet,* dass** die Winkelausrichtung jeder Stange (12) in Bezug zur zentralen Einheit (9) durch einen Stangenausrichtungsmechanismus (24) erfolgt.

5. Maschine nach Anspruch 4, ***dadurch gekennzeichnet,* dass** der Stangenausrichtungsmechanismus (24) mindestens einen Stangenausrichtungszylinder (25) umfasst.

6. Maschine nach irgend einem der Ansprüche 2 bis 5, ***dadurch gekennzeichnet,* dass** das (die) Rad (Räder) (8) mit einem zweiten Ende (16) der (ihrer) jeweiligen Stange (12) über eine Radtragestruktur (13) verbunden ist (sind), die mit dem zweiten Ende (16) mittels eines vierten Gelenks (18) mit einer im Wesentlichen vertikalen Achse verbunden ist.

7. Maschine nach Anspruch 6, ***dadurch gekennzeichnet,* dass** die Winkelausrichtung jeder Radtragestruktur (13) zur entsprechenden Stange (12) durch einen Ausrichtungsmechanismus der Radtragestruktur (27; 270) erfolgt.

8. Maschine nach Anspruch 7, ***dadurch gekennzeichnet,* dass** der Ausrichtungsmechanismus der Radtragestruktur (270) einen Ausrichtungszylinder der Radtragestruktur (310) umfasst.

9. Maschine nach den Ansprüchen 5 und 8, **dadurch gekennzeichnet, dass** der Stangenausrichtungszylinder (25) und der entsprechende Ausrichtungszylinder der Radtragestruktur (310) gekoppelt sind.

10. Maschine nach Anspruch 9, ***dadurch gekennzeichnet,* dass** der Stangenausrichtungszylinder (25) und der entsprechende Ausrichtungszylinder der Radtragestruktur (310) in Serie gekoppelt sind.

11. Maschine nach Anspruch 7, ***dadurch gekennzeichnet,* dass** der Ausrichtungsmechanismus der Radtragestruktur (27) eine Ausrichtungsstange der Radtragestruktur (28) umfasst, die mit der entsprechenden Stange (12) im Wesentlichen ein Parallelogramm bildet.

12. Maschine nach irgend einem der Ansprüche 2 bis 11, ***dadurch gekennzeichnet,* dass** jede Stange (12) getrennt ausgerichtet werden kann.

13. Maschine nach irgend einem der Ansprüche 1 bis 12, ***dadurch gekennzeichnet,* dass** die Länge der Stangen (12) im Wesentlichen geringer als die Hälfte der Breite der Arbeitseinheit (10) ist.

14. Maschine nach irgend einem der Ansprüche 1 bis 13, ***dadurch gekennzeichnet,* dass** die Achse des ersten Gelenks (6) und die Achse des zweiten Gelenks (21) im Wesentlichen zusammenfallen.

15. Maschine nach irgend einem der Ansprüche 1 bis 14, ***dadurch gekennzeichnet,* dass** die vertikale Mittelebene (26) im Wesentlichen durch die Achse des ersten Gelenks (6) verläuft.

16. Maschine nach irgend einem der Ansprüche 1 bis 15, ***dadurch gekennzeichnet,* dass** die Arbeitseinheit (10) ein Gestell (32) umfasst, das mit der zentralen Einheit (9) mittels des zweiten Gelenks (21) verbunden ist, so dass beim Übergang von einer Arbeitsposition (2; 200) in eine Transportposition (2') und umgekehrt das Gestell (32) in Bezug zur zentralen Einheit (9) um die Achse des zweiten Gelenks (21) schwenkt.

17. Maschine nach irgend einem der Ansprüche 1 bis 16, ***dadurch gekennzeichnet,* dass** die Arbeitseinheit (10) in ihre Arbeitsposition (2; 200) und/oder in ihre Transportposition (2') mittels eines Ausrichtungsmechanismus der Arbeitseinheit (22) gebracht wird.

18. Maschine nach Anspruch 17, ***dadurch gekennzeichnet,* dass** der Ausrichtungsmechanismus der Arbeitseinheit (22) einen Ausrichtungszylinder der Arbeitseinheit (23) umfasst.

19. Maschine nach den Ansprüchen 5 und 18, ***dadurch gekennzeichnet,* dass** die Stangenausrichtungszylinder (25) und der Ausrichtungszylinder der Arbeitseinheit (23) gekoppelt sind.

20. Maschine nach Anspruch 19, ***dadurch gekennzeichnet,* dass** die Stangenausrichtungszylinder (25) und der Ausrichtungszylinder der Arbeitseinheit (13) in Serie gekoppelt sind.

21. Maschine nach irgend einem der Ansprüche 1 bis 20, ***dadurch gekennzeichnet,* dass** das erste Gelenk (6) und das zweite Gelenk (21) am vorderen Teil der zentralen Einheit (9) verbunden sind.

22. Maschine nach irgend einem der Ansprüche 1 bis 21, ***dadurch gekennzeichnet****,* da es sich um eine Erntemaschine handelt.

23. Maschine nach Anspruch 22, ***dadurch gekennzeichnet,* dass** die Erntemaschine eine Vorrichtung umfasst, die es ermöglicht, die Futterpflanzen quer zur Vorschubrichtung für die Arbeit (2) zu verschieben.

24. Maschine nach Anspruch 23, ***dadurch gekennzeichnet,* dass** die Vorrichtung von einer Sammelvorrichtung (34) gebildet ist.

25. Maschine nach Anspruch 24, ***dadurch gekennzeichnet,* dass** die Sammelvorrichtung (34) mindestens ein Förderband (35) umfasst.

26. Maschine nach irgend einem der Ansprüche 23 bis 25, ***dadurch gekennzeichnet,* dass** das (die) Rad (Räder) (8), das (die) sich auf der Seite befindet(n), auf die die Futtermittel verschoben werden, derart angeordnet ist (sind), das es (sie) diese Verschiebung nicht stört(en).

27. Maschine nach irgend einem der Ansprüche 1 bis 26, ***dadurch gekennzeichnet,* dass** sich die Räder (8) hinter der Arbeitseinheit ( 10) befinden.
